# EUROPEAN PATENT SPECIFICATION

(11) **EP 3 335 936 B1**
(45) Date of publication and mention of the grant of the patent: **06.07.2022**
(21) Application number: 17203907.5
(22) Date of filing: 27.11.2017
(51) Int. Cl.: B60Q 1/26, B60Q 1/00

(54) **SIGNAL LIGHT INTEGRATED IN A CAMERA MODULE HOUSING AND CONTROL AND MONITORING CIRCUIT FOR CONTROLLING SAME**
IN EINEM KAMERAMODULGEHÄUSE INTEGRIERTES SIGNALLICHT UND STEUERUNGS- UND ÜBERWACHUNGSSCHALTUNG ZUR STEUERUNG EINES SOLCHEN SIGNALLICHTS
FEU DE SIGNALISATION INTÉGRÉ DANS UN BOÎTIER DE MODULE DE CAMERA ET CIRCUIT DE COMMANDE ET DE SURVEILLANCE POUR SA COMMANDE

(30) Priority: 28.11.2016 DE 102016122933; 13.12.2016 US 201615377571
(43) Date of publication of application: 20.06.2018
(73) Proprietor: SMR Patents S.à.r.l., 2453 Luxembourg (LU)
(72) Inventor: ROETZER, Ilka, 73770 Denkendorf (DE); LIESNER, Alf, 73630 Remshalden (DE); GOETTLICHER, Stefanie, 70499 Stuttgart (DE); WIECZOREK, Romeo, 73732 Esslingen (DE); FRITZ, Daniel, 70374 Stuttgart (DE)
(74) Representative: Weber-Bruls, Dorothée

(56) References cited:
- EP-A1- 2 269 870
- EP-A1- 2 826 668
- WO-A1-00/15462
- WO-A1-2011/161156
- DE-A1-102008 023 844
- DE-A1-102011 082 547
- DE-A1-102014 217 864
- DE-U1-202016 102 024
- FR-A1- 2 986 936
- FR-A1- 2 999 127
- GB-A- 2 139 340
- US-A1- 2002 191 407
- US-A1- 2013 265 431
- US-A1- 2014 218 212

## Description

### 1. Field of the Invention

The following description relates to a signal light that is integrated in a module housing of a vehicle. For example, a vehicle may include a camera module for providing a driver with a view of the side or rear of the vehicle, and the camera module housing may include one or more signaling lamps that may be used as indicators, warning lights, blind spot assistance lights, welcoming lights, among other uses. The camera module housing may be integrated with a side-view mirror, may be separate from a side-view mirror, or may replace a side-view mirror so that the vehicle includes the camera module housing without a side-view mirror.

The invention refers to a camera module and a rear view display device therewith.

### 2. Related Art

Turn signal lamps are used to replace side-view mirrors where turn signal lamps include a camera for providing a driver with a view of the side or rear of the vehicle. That is, side-view mirrors are being replaced with camera modules that include a lighting mechanism for turn signals. Such turn signal lamps or camera modules are typically positioned on the side of the vehicle and include light emitting diodes (LEDs) and light guides that are arranged so that drivers of other vehicles can easily detect when a driver intends to turn. For example, U.S. Patent Application Publication No. 2016/207444 A1 to Tatara, et al. describes a camera module housing that includes light emitting diodes and light passages that are arranged for turn signal indication.

In vehicle lighting applications, lighting devices having different colors may be used and separately controllable. If several lighting devices, e.g. light sources that have different colors and which are separately controllable, are used in components of a vehicle, for example in a rear view mirror, additional wiring, such as wiring for a second supply voltage, and/or a BUS connection needs to be utilized for controlling the lighting devices independently from each other such that the indicator can alternately flash in different colors.

For example, U.S. Patent No. 8,674,285 B2 to Drummond, et al. describes a vehicle rearview device system, wherein several devices comprised in a rear-view device are controlled via a vehicle's bus system, such as a LIN, CAN, Flexray or Ethernet system or an SMBus. However, most rear view devices do not include interfaces for an additional voltage supply and/or an interface for the vehicle's BUS system to control several lighting devices independently. Also, introducing corresponding interfaces would increase the complexity and costs of the overall system.

US 2013/265431 A1 discloses a monitor system used for a vehicle equipped with a camera for capturing an image of a predetermined area outside the vehicle, a display device for displaying the captured image to a driver, and a mirror for reflecting the predetermined area. The monitor system includes a failure detector for detecting a failure of a function that allows the display device to display the captured image, a report device for causing the display device to display failure information when the failure detector detects the failure, and a state detector for detecting whether the mirror is in a state where the mirror reflects the predetermined area such that the driver views the predetermined area on the mirror. When the mirror is in the state, the report device causes the display device to delete or zoon out the displayed failure information.

DE 10 2014 217864 A1 discloses a motor vehicle camera which is at least partially held in a housing which is installed on or in a motor vehicle. There is at least one lighting means for illuminating at least a partial region of the camera environment. The invention suggests that the housing is at least partially light-conducting and that at least one lighting means is positioned in such a way that light can be coupled into the light-conducting part and can be coupled out in the direction of the partial region of the camera environment to be illuminated. In this way a better illumination of at least the partial area of the camera environment can be achieved, at the same time providing a very compact solution

WO 00/15462 A1 discloses a vehicle system that includes a vehicle lamp assembly including a plurality of LEDs that emit white light so as to function as an illuminator light. The lamp assembly also may include a plurality of LEDs that emit colored light, such as red or red-orange, so as to function as a signal light. Alternatively or additionally, the lamp assembly may include a camera of a vehicle imaging system. The lamp assembly may serve as a center high mounted stop light or as a tail light. The system also includes a controller that rapidly pulses the LEDs on and off at a rate that is imperceivable by the human eye. The pulsing intervals of the LEDs may be related to the readout intervals of the camera sensor array. In this manner, the LEDs may be pulsed on during camera readout so as to increase their intensity while the camera is capturing an image, or may be pulsed off during camera readout to prevent feedback glare from interfering with image capture by a highly sensitive image sensor array on the camera.

GB 2 139 340 A discloses a light for motor vehicles, in particular a signal light for motor vehicles, with three-phase light-emitting diodes or light- emitting diode chips as light sources, which are arranged on or in a base-plate. In the proposed light, three-phase light- emitting diodes serve as the light sources, these diodes being white or transparent when in the unexcited state and emitting light of at least two different colors, for different lighting and/or signaling functions, it being possible to activate these functions, according to the signal color desired, by applying different voltages.

DE 10 2011 082547 A1 discloses a device having an optical sensor which consists of a camera module or an optoelectronic converter and a unit for emitting light or laser beams. The optical sensor is arranged at the vehicle body or at the vehicle body component. The optical sensor carries out a basic function of capturing an image, emitting a signal and capturing signal for a functional device of a motor vehicle and carries out additional function of capturing an image or emitting light or signal and capturing signal for another functional device of the motor vehicle.

US 2002/191407 A1 discloses a night vision clearance light assembly including a shell, an array of visible light emitting elements, and a night vision device. The visible light emitting elements are preferably LEDs mounted on a ring received in the shell. The night vision device is operatively connected to an associated night vision camera and sees through an opening in the ring and the lens. The assembly is easily mounted in a standard factory-cut clearance light housing in the exterior of a truck cab.

FR 2 986 936 A1 discloses a method involving coding a pulse modulated supply signal according to type of lighting/signaling function by assigning a determined wave form to each of lighting and signaling functions by bijective mapping. The coded modulated supply signal is transmitted toward lighting/signaling blocks over single wire connection by a decoder. The transmitted coded modulated supply signal is decoded to discriminate the lighting/signaling function to be activated, and the coded modulated supply signal is switched toward the blocks to execute the discriminated function. Independent claims are also included for the following: a device for controlling lighting/signaling functions of lighting/signaling blocks supplied with modulation of impulses of a car a switch for a lighting and/or signaling device.

FR 2 999 127 A1 discloses a device having a branch including a controlled switch i.e. transistor, and a luminous device that are connected in series. Another branch includes another luminous device that comprises characteristic voltage when the former luminous device is switched. A control device produces a control signal of the switch in a closing level in which the former luminous device is switched and the latter luminous device is switched off, and an opening level in which the latter luminous device is switched on and the former luminous device is switched off. An independent claim is also included for a lighting block

WO 2011/161156 A1 discloses a work luminaire for an industrial truck, comprising a plurality of luminous elements and a luminaire function block connected to the luminous elements, said luminaire function block being designed such that the luminous elements can selectively be supplied with electric current so as to activate and deactivate the luminous elements. According to the invention, for electrical supply purposes the luminaire function block can be coupled, or is coupled, to a vehicle function block associated with the commercial vehicle and comprises evaluation means which are designed such that a control signal, which is generated by the vehicle function block and transmitted via an electrical supply line, can be detected and evaluated, and that the luminaire function block can activate and deactivate defined luminous elements depending on the detected control signal.

DE 20 2016 102024 U1 discloses a warning indicator system for a vehicle comprising a warning indicator arranged to surround a reflective element carried in a rearview mirror assembly of the vehicle.

US 2014/218212 A1 discloses a lighting system for the exterior of a vehicle that includes a housing, a sensor, a lamp assembly, and a controller. The sensor is carried by the housing and detects the presence of a hazard in a predetermined region on the ground adjacent to the vehicle. The lamp assembly is carried by the housing and has a light source for projecting light onto at least a portion of the region. The controller is coupled to the sensor and the lamp assembly. The controller has a light activation input and, upon receipt of a light activation command at the input, it controls the lamp assembly to project light from the lamp assembly of a first color or other visible characteristic when no hazard is detected by the sensor and of a second color or other visible characteristic when the hazard is detected by the sensor.

DE 10 2008 023844 A1 discloses a motorcycle rear light assembly having a first array of at least one LED that illuminates with at least one first color. The first group of LEDs operates in a non-operated state, a driving state in which each LED in the first array lights up with a first intensity, and a braking state in which each LED lights up with a second, higher intensity. A second array of at least one LED lights up with at least one second color. The second array operates in an unactuated state, and in a flashing state, where each LED of the second array alternately lights or does not light. Each LED of the first array lights up with the first or the second intensity, while each LED of the second array lights up or does not light up alternately in the flashing state.

EP 2 269 870 A1 discloses a lighting system for exterior lights of an automobile comprises a first lighting unit primarily for outputting a first automotive light signal and a failure detection system for detecting a failure of the first lighting unit. A second lighting unit is primarily for outputting a second automotive light signal. The second lighting unit comprises an LED light unit. A controller is adapted to determine if there is failure of the first lighting unit, and if there is failure of the first lighting unit, to use the second lighting unit to generate the first automotive light signal. This is in response to an output request from the first lighting unit.

EP 2 826 668 A1 discloses a luminous device for a motor vehicle comprising at least: a first pilot circuit and a first group of LEDs, the first pilot circuit being able to control the first group of LEDs so that the first group of LEDs participate in the production of a first lighting / signaling function, and a second pilot circuit and a second group of LEDs, the second pilot circuit being suitable driving the second group of LEDs so that the second group of LEDs participate in the realization of a second lighting / signaling function, characterized in that the device comprises a capsule in which are encapsulated the first and second groups of LEDs and that at the first function and the second function is assigned a specific distinct emission color.Therefore, camera modules that include an improved arrangement of LEDs and light guides for providing improved visibility to a driver of a vehicle is needed. Also, versatility in light indications provided by a camera module; for example, by using indicators that include more than one color is needed. Further, there is a need for an improved control circuit that can be used for controlling at least two lighting devices and that doesn't need to be connected to a vehicle's bus system, and/or doesn't need to utilize several input voltages to control the lighting devices independently.

### SUMMARY

In an aspect, a camera module of a vehicle includes the features as defined in the appended claim 1.

The first light source is a light emitting diode (LED) that is arranged at a rear portion of the camera module housing, and the camera module further comprises a plurality of light guides connecting the LED to the first passage and the second passage.

The camera module may further include a control circuit for controlling lighting of the signal lamp.

The first passage and the second passage may have a circular, ovular, square, rectangular, triangular, or octagonal shape.

In an embodiment, the first light source comprises a first lighting device and a second lighting device, and the control circuit comprises at least a voltage input channel for receiving an input voltage; at least a first output channel, wherein the first output channel is adapted to control the on and off states of the first lighting device connected to the first output channel, and at least a second output channel, wherein the second output channel is adapted to control the on and off states of the second lighting device connected to the second output channel, wherein the first output channel is adapted to turn the first lighting device on and the second output channel is adapted to turn the second lighting device off based on a first information in the input voltage, and the first output channel is adapted to turn the first lighting device off and the second output channel is adapted to turn the second lighting device on based on a second information in the input voltage.

Here, the terms "input channel", "first output channel", and "second output channel" can be used to refer to components of the control circuit including interfaces, where a voltage can be applied to/supplied from. Also, the term "controlling the on and off states" can be used to refer to supplying a voltage at the corresponding output channel so that the lighting device connected to the output channel will start radiating light. The term "information" can be used to refer to any information in the input voltage signal, such as voltage values, frequencies, modulated signals on the input voltage, or its waveform, etc.

In one example, the first lighting device and the second lighting device comprise an array of light sources, wherein the first lighting device comprises light sources having the first color, and wherein the second lighting device comprises light sources having the second color, preferably the first and the second lighting device comprise one of an amber light source and blue light source.

In another example, the light sources are comprised in a side-turn indicator, preferably in a side-turn indicator in a rear view device of the vehicle.

In yet another example, the control circuit is adapted to determine the first information by determining that the input voltage is below a threshold, and determining the second information by determining that the input voltage is above the threshold, and preferably the control circuit comprises a trigger circuit to adjust the threshold.

In another example, at least one of the first output channel and/or the second output channel comprises/comprise a delay circuit for time-delaying the output channel/output channels.

In another example, the control circuit is adapted to determine the first information by determining that the input voltage comprises a first duty cycle rate, preferably 20%, and to determine the second information by determining that the input voltage comprises a second duty cycle rate, preferably 50%, preferably wherein the duty cycle interval is 1 KHz.

In yet another example, the control circuit is adapted to determine the first information by determining that the input voltage comprises a first frequency and to determine the second information by determining that the input voltage comprises a second frequency, wherein the first and second frequencies are different.

In another example, the control circuit comprises at least one filter circuit to extract the first information and the second information from the input voltage.

In another example, the input voltage comprises the supply voltage for the first lighting device and/or second lighting device, and/or the control circuit comprises a discreet logic circuit, or a field-programmable gate array, FPGA.

The invention also relates to a rear view display device for a vehicle comprising the features of the appended claim 8.

In one example of the monitoring circuit, the monitoring circuit comprises a, radio-frequency identification, RFID, receiver arranged in a passenger compartment of the vehicle, and wherein the RFID receiver is adapted to detect the presence of a least one RFID sender, preferably a plurality of RFID senders in the passenger compartment, and wherein the monitoring circuit is adapted to supply the input voltage comprising the first and second information to the control circuit as a result of detecting the removal of the RFID sender, preferably the input voltage is sent upon detecting that the vehicle is being locked.

In yet another example of the monitoring circuit, the monitoring circuit is coupled to a position detection circuit, preferably comprising a Global Positioning System, GPS, receiver, to obtain information regarding the position of the vehicle, and wherein the monitoring circuit is adapted to supply the input voltage comprising the first and second information to the control circuit as a result of detecting the position of the vehicle, preferably the input voltage is sent upon detecting that the vehicle is positioned in a no-parking zone.

In yet another example of the monitoring circuit, the monitoring circuit is coupled to an onboard diagnostic system, and wherein the monitoring circuit is adapted to supply the input voltage comprising the first and second information to the control circuit as a result of detecting a malfunctioning of the vehicle detected by the onboard diagnostic system, preferably wherein a malfunctioning is detected based on a tire pressure value, and/or fuel level value.

In another example of the monitoring circuit, the monitoring circuit comprises an interface to couple the monitoring circuit to at least one turn-indicator, preferably to all turn-indicators in the vehicle.

Advantageously, the control circuit according to the invention can control two LEDs or two groups of LEDs, having different colors by means of the input voltage signal only. Therefore, there is no need to install additional wiring, e.g. as power supply for the second lighting device, or to connect the bus system to the control circuit for controlling the LEDs. Therefore, depending on the information in the input signal, the LEDs can be made to flash in one of two colors, or alternately in two colors. For example, as warning of possible hazardous situations, or just to convey general information.

Also, advantageously by using lighting devices comprising arrays of LEDs, lighting applications can be utilized that have a good visibility. Advantageously, an amber or yellow LED or LED array can be utilized as turn signal indicator, wherein a blue LED or LED array can be used to warn for hazardous situations. Also, the interval times of the two LEDs can be adjusted so that many different information can be conveyed via a side-turn indicator that uses such a control device according to the invention.

The first and second information used to control the lighting devices can be advantageously simply deduced from the voltage level of the input voltage by determining whether the voltage is below or above a certain threshold voltage. Also, advantageously a trigger circuit, such as a Schmitt-Trigger, i.e. a comparator circuit with hysteresis, could be used to define two defined states below and above the threshold voltage. Also, when a delay circuit is used, the output of the lighting device that corresponds to a lower voltage, i.e. voltage below the threshold, can be time-delayed so that the lighting device does not start radiating light, i.e. starts radiating light in the few fractions of a second while the input voltage is increasing from below to above the threshold.

Also, alternatively, for detecting the first and second information from the voltage level, the information could be also detected from the duty cycle making the detecting process more accurate. A first duty cycle rate of 50% and a second duty cycle rate of 20% at an interval frequency of 1 KHz have proven to be especially advantageous, since these duty cycle rates allow to convey sufficient energy, while making a clear determination possible. However, in yet another example, also the frequency of the input voltage could be used to convey the first and second information. Since the invention suggests various alternative ways to convey the first and second information, the invention can be used for a wide range of applications.

Advantageously, the input voltage can be used as supply voltage for the lighting devices. Therefore, no additional voltage supply needs to used. Also, the control circuit can be built with discreet logic or realized on a field-programmable gate array, i.e. depending on the desired application.

If the control circuit is used together with a monitoring circuit according to the invention, the lighting devices can be used to warn the driver, if an item comprising an RFID sender was unintentionally left in the vehicle upon locking the vehicle, or if the vehicle is parked in a no-parking zone, or in case there is a mechanical problem, or problem of any kind, with the vehicle.

### DESCRIPTION OF THE SEVERAL VIEWS OF THE DRAWINGS

The foregoing summary, as well as the following detailed description, will be better understood when read in conjunction with the appended drawings. For the purpose of illustration, there is shown in the drawings certain embodiments of the present invention. It should be understood, however, that the invention is not limited to the precise arrangements and instrumentalities shown. The accompanying drawings, which are incorporated in and constitute a part of this specification, illustrate an implementation of systems and apparatuses consistent with the present invention and, together with the description, serve to explain advantages and principles consistent with the invention.
FIG. 1 is a diagram illustrating the arrangement of light passages around a camera lens that is mounted at the rear surface (seen from the driving direction) of the camera module housing.
FIG. 2 is a diagram illustrating another arrangement of light passages around a camera module housing and a camera lens that is mounted at the rear surface (seen from the driving direction) of the camera module housing.
FIG. 3 is a diagram illustrating yet another arrangement of light passages around a camera lens that is mounted at the rear surface (seen from the driving direction) of the camera module housing.
FIG. 4 is a diagram illustrating an additional arrangement of light passages around a camera module housing and a camera lens that is mounted at the rear surface (seen from the driving direction) of the camera module housing.
FIG. 5 is a diagram illustrating a further arrangement of light passages around a camera module housing and a camera lens that is mounted at the rear surface (seen from the driving direction) of the camera module housing.
FIGS. 6A and 6B are diagrams illustrating an arrangement of an LED, light guide, and light passages in a camera module housing.
FIGS. 7A, 7B, and 7C are diagrams illustrating examples of the arrangement of a light guide on an outer surface of a camera module housing.
FIG. 8 is a diagram illustrating an arrangement of light passages connected to LEDs of different colors.
FIGS. 9A and 9B are diagrams illustrating an arrangement of light passages connected to two color LEDs.
FIGS. 10A and 10B are diagrams illustrating another arrangement of light passages connected to two color LEDs.
FIG. 11 is a diagram illustrating a single light passage arranged on a camera module housing.
FIG. 12 is a diagram illustrating a plurality of light passages arranged on a camera module housing.
FIG. 13 is a diagram illustrating a first example of isolating a signal of a light source by alignment of the light source.
FIG. 14 is a diagram illustrating a second example of isolating a signal of a light source by including the light source as an integrated part of the camera module.
FIG. 15 is a diagram illustrating a third example of isolating a signal of a light source by including the light source in a slot if the camera module.
FIG. 16 is a diagram illustrating a fourth example of isolating a signal of a light source by including the light source as an attached part.
FIG. 17 is a diagram illustrating an example of a schematic view of a control circuit and a monitoring circuit.
FIG. 18 is a diagram illustrating an example of a schematic voltage versus time diagram of an input voltage.
FIG. 19 is a diagram illustrating another example of a schematic voltage versus frequency diagram of an input voltage .
FIG. 20 is a diagram illustrating yet another example of a schematic voltage versus frequency diagram of an input voltage.

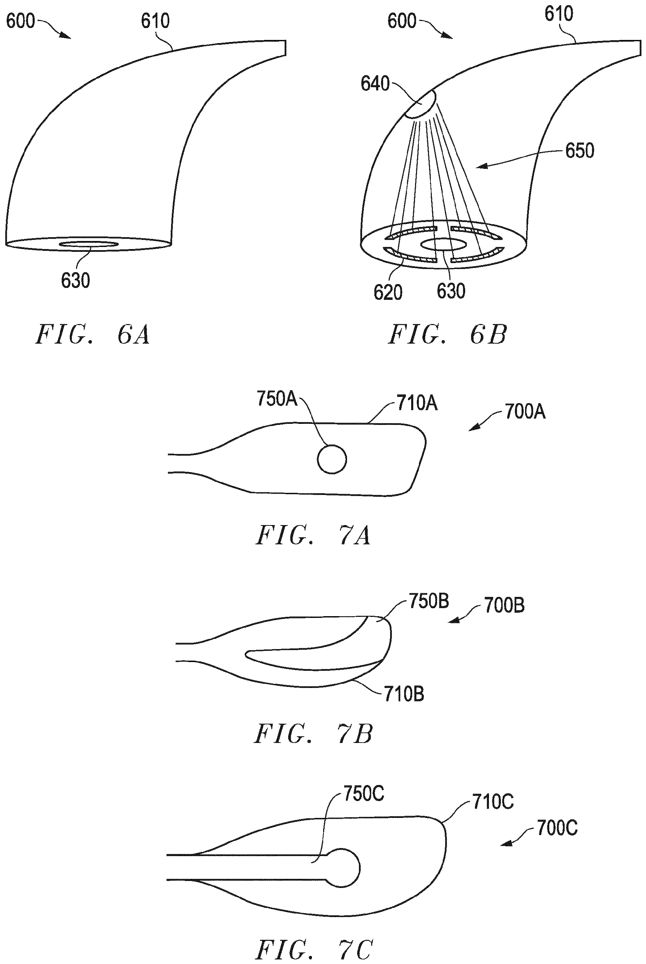

The examples according to FIG. 7A, 7B, 7C, 8, 9A, 9B and 11 are however not part of the present invention and are present for illustration purposes only.

### DETAILED DESCRIPTION OF THE INVENTION

Before explaining at least one example of the invention in detail, it is to be understood that the invention is not limited in its application to the details of construction and to the arrangements of the components set forth in the following description or illustrated in the drawings. The Figures and written description are provided to teach any person skilled in the art to make and use the inventions for which patent protection is sought. The invention is capable of other embodiments and of being practiced and carried out in various ways. Those skilled in the art will appreciate that not all features of a commercial embodiment are shown for the sake of clarity and understanding. Persons of skill in the art will also appreciate that the development of an actual commercial embodiment incorporating aspects of the present invention will require numerous implementation-specific decisions to achieve the developer's ultimate goal for the commercial embodiment. While these efforts may be complex and time-consuming, these efforts nevertheless would be a routine undertaking for those of skill in the art having the benefit of this disclosure.

In addition, it is to be understood that the phraseology and terminology employed herein are for the purpose of description and should not be regarded as limiting. For example, the use of a singular term, such as, "a" is not intended as limiting of the number of items. Also the use of relational terms, such as but not limited to, "top," "bottom," "left," "right," "upper," "lower," "down," "up," "side," are used in the description for clarity in specific reference to the Figures and are not intended to limit the scope of the invention as defined in the appended claims.

Further, it should be understood that any one of the features of the invention may be used separately or in combination with other features. Other systems, methods, features, and advantages of the invention will be or become apparent to one with skill in the art upon examination of the Figures and the detailed description.

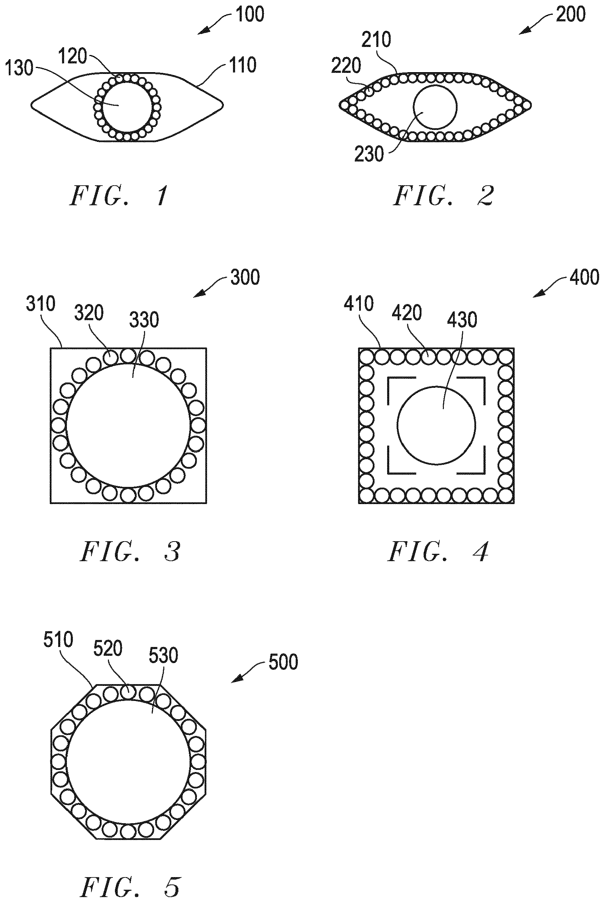

Referring to the embodiments illustrated in FIGS. 1-5, an arrangement of a signaling lamp in a rear surface (seen from the driving direction) of a camera module housing is illustrated. The arrangement of the light passages could be variable in the front area of the camera module. However, in this description, the light passages are chosen so that the light from the signaling lamp is visible from the side and behind the car and/or from the driver of the vehicle. The light passages can have essentially any shape, e.g. circular, rectangular, etc., and can be arranged on the surface of the camera module housing or around the lens of the camera.

FIG. 1 is a diagram illustrating the arrangement of light passages around a camera lens that is mounted at the rear surface (seen from the driving direction) of the camera module housing.

Referring to FIG. 1, the camera module 100 includes a camera module housing 110 that houses all components of the camera module 100. That is, the camera module housing 110 includes camera components and lighting components. As illustrated in FIG. 1, a plurality of light passages 120 are arranged around the periphery of a camera lens 130 and within the camera module housing 110. The light passages are chosen so that the light from the signaling lamp is visible from the side and behind the car and/or from the driver of the vehicle. The light passages can have essentially any shape, e.g. circular, rectangular, etc., and can be arranged on the surface of the camera module housing or around the lens of the camera.

FIG. 2 is a diagram illustrating another arrangement of light passages around a camera module housing and a camera lens that is mounted at the rear surface (seen from the driving direction) of the camera module housing.

Referring to FIG. 2, the camera module 200 includes a camera module housing 210 that houses all components of the camera module 200. That is, the camera module housing 210 includes camera components and lighting components. As illustrated in FIG. 2, a plurality of light passages 220 are arranged within the periphery of the camera module housing 210 with the camera lens 230 enclosed therein. The light passages are chosen so that the light from the signaling lamp is visible from the side and behind the car and/or from the driver of the vehicle. The light passages can have essentially any shape, e.g. circular, rectangular, etc., and can be arranged on the surface of the camera module housing or around the lens of the camera.

FIG. 3 is a diagram illustrating yet another arrangement of light passages around a camera lens that is mounted at the rear surface (seen from the driving direction) of the camera module housing.

Referring to FIG. 3, the camera module 300 includes a camera module housing 310 that houses all components of the camera module 300. That is, the camera module housing 310 includes camera components and lighting components. As illustrated in FIG. 3, a plurality of light passages 320 are arranged around the periphery of a camera lens 330 and within the camera module housing 310. The light passages are chosen so that the light from the signaling lamp is visible from the side and behind the car and/or from the driver of the vehicle. The light passages can have essentially any shape, e.g. circular, rectangular, an icon, a freeform shape etc., and can be arranged on the surface of the camera module housing or around the lens of the camera.

FIG. 4 is a diagram illustrating an additional arrangement of light passages around a camera module housing and a camera lens that is mounted at the rear surface (seen from the driving direction) of the camera module housing.

Referring to FIG. 4, the camera module 400 includes a camera module housing 410 that houses all components of the camera module 400. That is, the camera module housing 410 includes camera components and lighting components. As illustrated in FIG. 4, a plurality of light passages 420 are arranged within the periphery of the camera module housing 410 with the camera lens 430 enclosed therein. The light passages are chosen so that the light from the signaling lamp is visible from the side and behind the car and/or from the driver of the vehicle. The light passages can have essentially any shape, e.g. circular, rectangular, etc., and can be arranged on the surface of the camera module housing or around the lens of the camera.

FIG. 5 is a diagram illustrating a further arrangement of light passages around a camera module housing and a camera lens that is mounted at the rear surface (seen from the driving direction) of the camera module housing.

Referring to FIG. 5, the camera module 500 includes a camera module housing 510 that houses all components of the camera module 500. That is, the camera module housing 510 includes camera components and lighting components. As illustrated in FIG. 5, a plurality of light passages 520 are arranged within the periphery of the camera module housing 510 and around the periphery of the camera lens 530. The light passages are chosen so that the light from the signaling lamp is visible from the side and behind the car and/or from the driver of the vehicle. The light passages can have essentially any shape, e.g. circular, rectangular, etc., and can be arranged on the surface of the camera module housing or around the lens of the camera.

FIGS. 6A and 6B are diagrams illustrating an arrangement of an LED, light guide, and light passages in a camera module housing.

Referring to FIG. 6A, a top view of a camera module 600 including a camera module housing 610 and a camera lens 630 is illustrated. Referring to FIG. 6B, a plurality of light passages 620 are arranged around the camera lens 630 and within the camera housing 610. Also illustrated are an LED 640 and light guides 650. The light guides 650 extend from the LED to each of the light passages 620 so that the light passages 620 radiate the light provided by the LED 640. As in previous examples where the light passages are arranged on the rear surface (seen from the driving direction) of the camera module housing, here also the light passages 620 are arranged on the rear surface of the camera module housing 610.

FIGS. 7A, 7B, and 7C are diagrams illustrating examples of the arrangement of a light guide on an outer surface of a camera module housing.

Referring to FIG. 7A, another example provides a light guide 750A arranged at the outer periphery of the camera module housing 710A of the camera module 700A (i.e. the part that points towards the street). The light guide 750A is arranged in the surface of the camera module housing 710A so that the light from the LED can be seen from the side and from behind the vehicle.

Referring to FIG. 7B, similar to FIG. 7A, another example provides a light guide 750B arranged at the outer periphery of the camera module housing 710B of the camera module 700B (i.e. the part that points towards the street). The light guide 750B is arranged in the surface of the camera module housing 710B so that the light from the LED can be seen from the side and from behind the vehicle.

Referring to FIG. 7C, similar to FIGS. 7A and 7B, another example provides a light guide 750C arranged at the outer periphery of the camera module housing 710C of the camera module 700C (i.e. the part that points towards the street). The light guide 750C is arranged in the surface of the camera module housing 710C so that the light from the LED can be seen from the side and from behind the vehicle.

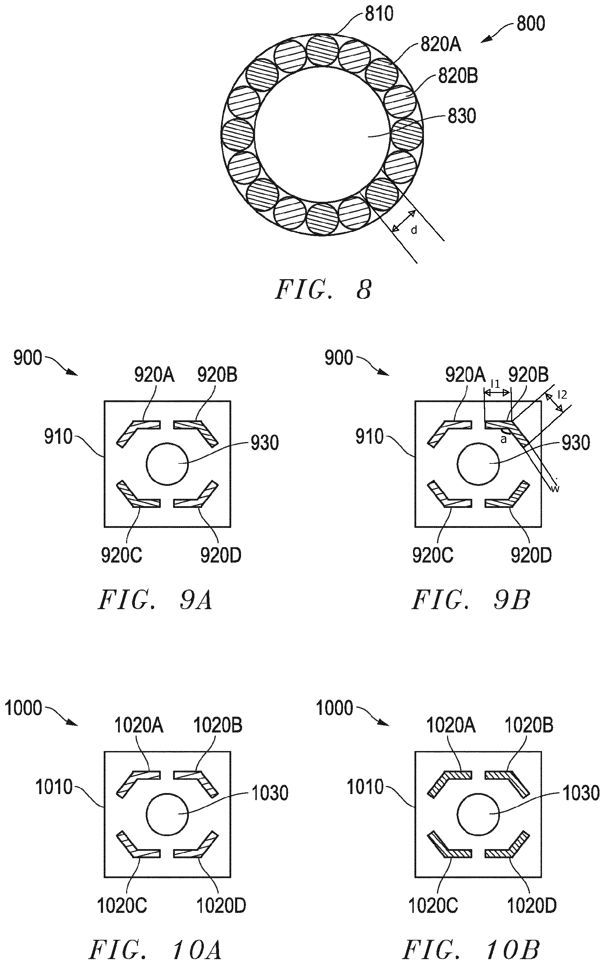

FIG. 8 is a diagram illustrating an arrangement of light passages connected to LEDs of different colors.

Referring to FIG. 8, another example of a camera module 800 is illustrated. In this example, the light passages 820A, 820B are arranged around a periphery of a camera lens 830 and within the boundary formed by the camera module housing 810. In this example, some of the light passages 820A are configured to receive light of a first color and some of the light passages 820B are configured to receive light of a second, different color. The signaling lamp could be used to radiate light in different colors, i.e. depending on a desired application. For example, orange light when used as indicator, red light when used as warning light for blind spot detection, and green or blue light for signaling that the car is being locked/unlocked. Still referring to FIG. 8, in an example, a diameter of any of the light passages 820A, 820B may range from 0.2 mm to 15 mm.

FIG. 9A and 9B are diagrams illustrating an arrangement of light passages connected to two color LEDs.

In this example, four light passages 920A, 920B, 920C, and 920D are arranged between a camera lens 930 and the boundary formed by the camera housing 910. The camera module 900 is configured to flash according to a desired application. For example, as illustrated in FIG. 9A, at a first time period, the first light passage 920A and the fourth light passage 920D can have the same color, while the second light passage 920B and the third light passage 920C can have a second, different color. As illustrated in FIG. 9B, at a second time period, the first light passage 920A and the third light passage 920C can have the same color, while the second light passage 920B and the fourth light passage 920D can have a second, different color. Any number of iterations can be appreciated to a person having ordinary skill in the art.

Still referring to FIG. 9B, a first length 11 of any of the light passages 920A, 920B, 920C, 920D may range from 0.25 mm - 17.5 mm and a second length 12 may range from 0.25 mm - 17.5 mm and be different or the same such that an overall length 11 and 12 may range from 0.5 mm to 35 mm. A width w may range from 0.2 mm to 15 mm and an angle a around the lens may range from 90 degrees to 175 degrees, as illustrated in FIG. 9B.

FIGS. 10A and 10B are diagrams illustrating another arrangement of light passages.

In this example, four light passages 1020A, 1020B, 1020C, and 1020D are arranged between a camera lens 1030 and the boundary formed by the camera housing 1010. The camera module 1000 is configured to radiate a different color light according to a desired application. For example, as illustrated in FIG. 10A, at a first time period, all light passages 1020A-D can have the same first color. As illustrated in FIG. 10B, at a second time period, all light passages 1020A-D can have a second, different color. Any number of iterations can be appreciated to a person having ordinary skill in the art.

The camera module may include a signal lamp having only a single light source that is adapted to radiate light having a first color and a second color the first color being different from the second color. Such a light source may include a multi-color LED or any other light source that is adapted to radiate light having more than one color.

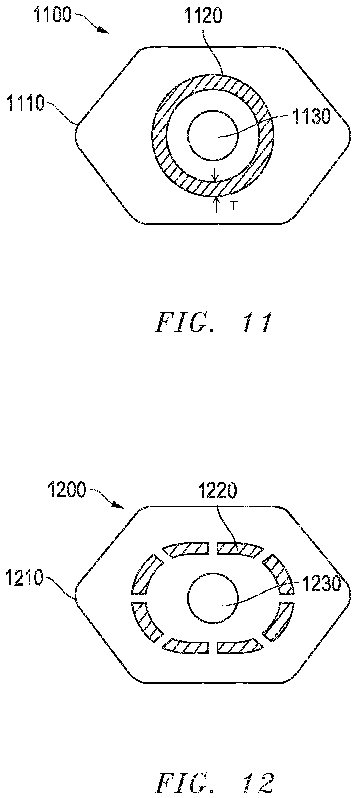

In another example, which is however not part of the present invention, the camera module may include a single opening, but not limited to, a circle formed around the circumference of the camera lens. Referring to FIG. 11, a single light passage 1120 is arranged between a camera lens 1130 and the boundary formed by the camera module housing 1110. A thickness T of the light passage 1120 may, for example, range from 0.2 mm to 15 mm along the entire circumference of the light passage 1120. The camera module 1100 is configured to radiate different color light according to a desired application and in accordance with the examples described in this application. Any number of iterations can be appreciated to a person having ordinary skill in the art.

FIG. 12 is a diagram illustrating another example of a camera module 1200. In this example, a plurality of passages 1120 are arranged in an oval configuration around the camera lens 1230 and within a boundary formed by the camera module housing 1210. The camera module 1200 is configured to radiate different color light according to a desired application and in accordance with the examples described in this application. Any number of iterations can be appreciated to a person having ordinary skill in the art.

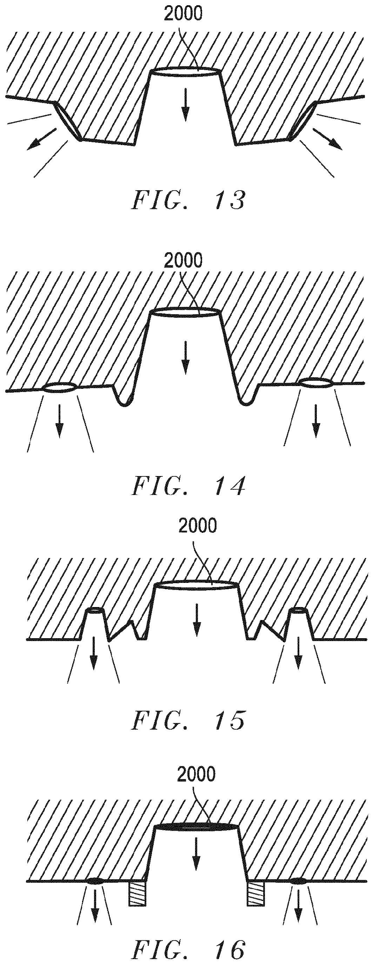

In addition, a number of different examples may be applied for isolating the light source and the light radiated by the light source from the camera. FIG. 13 is a diagram illustrating a first example of isolating a signal of a light source by alignment of the light source at angle with the camera 2000. In this example, the light source and the light emitted is arranged and radiated at an angle for isolation of the light.

FIG. 14 is a diagram illustrating a second example of isolating a signal of a light source by including the light source as an integrated part of the camera 2000. In this example, the light source may include a bar, for example as illustrated in the drawing, which is integrated with the camera 2000.

FIG. 15 is a diagram illustrating a third example of isolating a signal of a light source by including the light source in a slot of the camera module. In this example, the light source may be integrated in the camera module and in a slot that is positioned adjacent to the camera 2000 for isolating the light source and the radiated light from the camera 2000.

FIG. 16 is a diagram illustrating a fourth example of isolating a signal of a light source by including a separating bar, chrome ring, or some other isolating feature as an attached part. In this example, the attachable bar can be a different material that is attached adjacent to the camera 2000 and outside the camera module, as illustrated in the drawings.

According to these examples and the examples provided throughout the application, the light source may be isolated from the camera 2000 so that a signal from the light source does not interfere with an input of the camera 2000. Also, a signal of the light source is configured to be recognized by the driver but does not interfere with an input of the camera 2000.

It should be appreciated that specific colors of light are radiated for specific functions. For example, an orange light may be radiated for a turn light, a red or magenta light may be radiated for a blind spot indication, a yellow or light yellow light may be emitted for notifying that an item was forgotten in the vehicle such as a key or a smarphone, a yellow or dark yellow light for object detection warning, a purple light for a welcome, a green light for ambiance, among different examples of different colored lights for different applications. It should be appreciated that the color of the light and application is not limited to the examples provided herein. It is appreciated that several colors are legally restricted in certain jurisdictions such as blue or white forward light.

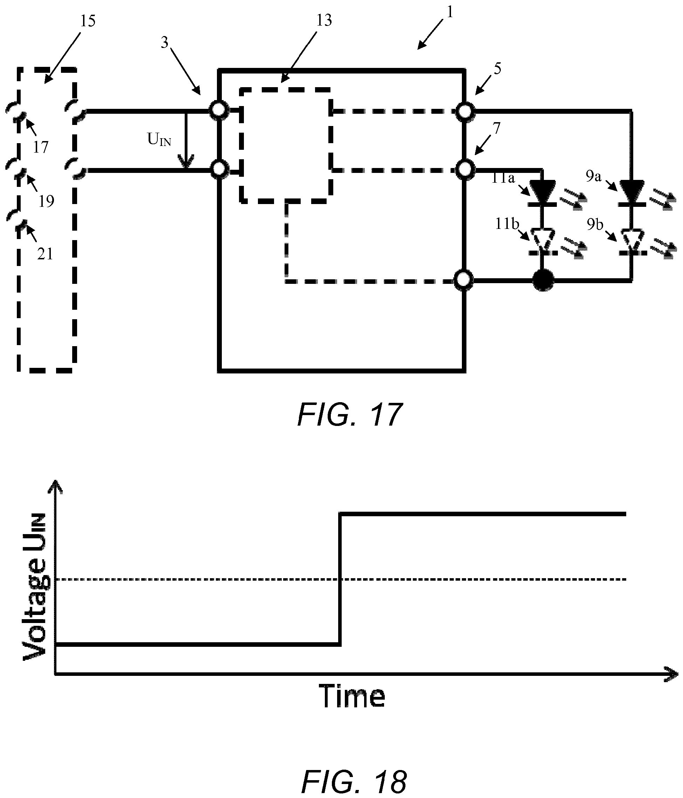

FIG. 17 is a diagram illustrating an example of a schematic view of a control circuit and a monitoring circuit.

Referring to FIG. 17, the control circuit 1 for controlling the signal lamp of the camera module, includes a voltage input channel 3 for receiving an input voltage U_{IN}, and a first output channel 5 and a second output channel 7. From FIG. 17, it can be seen that the first and second lighting devices comprise light sources 9a, 9b, 11a, 11b and are connected to the output channels 5, 7. In the shown example, two light sources 9a, 9b, 11a, 11b are connected to each output channel 5, 7.

Also shown with dotted lines is a filter circuit 13 that can be used in some embodiments of the invention to extract the first information and the second information from the input voltage U_{IN}. Depending on the first information and the second information, the first output channel 5 is adapted to control the on and off states of the first lighting device light sources 9a, 9b connected thereto, and the second output channel 7 is adapted to control the on and off states of the second lighting device light sources 11a, 11b connected thereto. The skilled person would know that the filter circuit 13 could comprise two transistor to switch between the lighting devices, i.e. depending on the input voltage U_{IN}.

FIG. 17 also illustrates a monitoring circuit 15 that could be connected in some embodiments to the control circuit 1 and which could be adapted to supply the input voltage U_{IN} to the control circuit 1. As it is exemplarily shown in FIG. 17, the monitoring circuit 15 could comprise various interfaces, e.g. a first interface 17 for connecting a RFID receiver, a second interface 19 for connecting a GPS receiver, and a third interface 21 for connecting an Onboard Diagnostic System. The skilled person should appreciate, however, that the monitoring circuit 15 could also comprise just one of the above mentioned interfaces, and that the input voltage U_{IN}, i.e. the first and second information, is generated based on signals on the interfaces 17, 19, 21. Here, it should be appreciated by a person having ordinary skill in the art that the monitoring circuit 15 could be comprised in a Electronic Control Unit, ECU.

FIG. 18 illustrates a schematic voltage versus time diagram of an input voltage U_{IN} according to a first embodiment of the invention. In the figure, a dotted line is used to indicate the threshold, or threshold voltage. As it can be seen from the figure, the voltage remains at a level below the threshold for some period of time. By measuring the input voltage U_{IN} it can be determined that the first information is conveyed by the input voltage U_{IN}, because the input voltage U_{IN} is below the threshold. In that case, the first output channel turns on the first lighting device, and the second output channel turns off the second lighting device, or keeps the second lighting device turned off. When the input voltage U_{IN} raises above the threshold, the first output channel turns the first lighting device off, and the second output channel turns the second lighting device on, i.e. for as long as the input voltage U_{IN} is above the threshold.

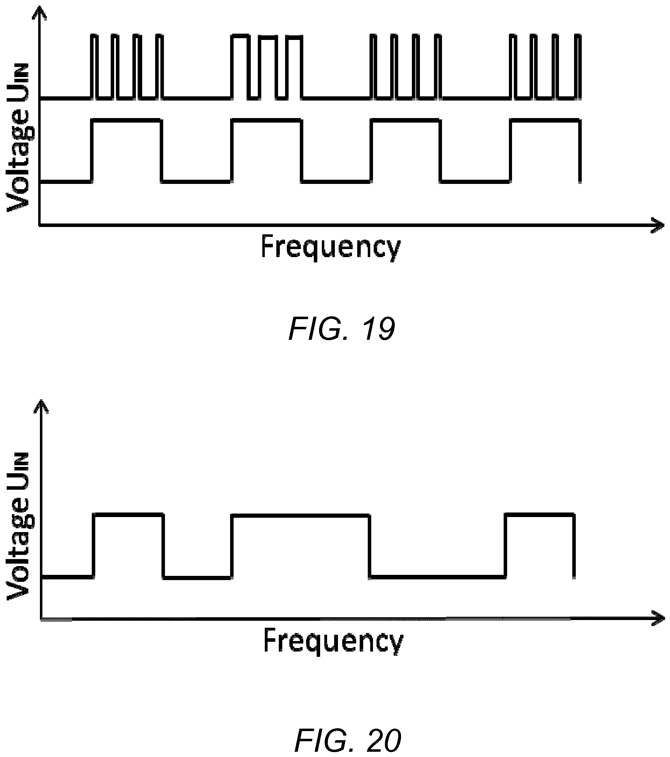

FIG. 19 shows a schematic voltage versus frequency diagram of an input voltage according to a second embodiment of the invention. Here, on the top of the diagram, the input voltage U_{IN} is shown as pulsed input voltage alternating between high and low, e.g. on and off, respectively. The frequency could be, for example, in the region of 1 Hz. On the bottom of the diagram a duty cycle rate is exemplarily shown. In the context of this invention, the term "duty cycle" is used to define the percentage of one period in which the input voltage U_{IN} is high, or switched on, respectively. In the first, third and fourth periods that are exemplary shown in FIG. 19, the duty cycle might be 20%, and hence might allow the determination that the first information is conveyed in the input voltage U_{IN}. In the second period that is exemplarily shown in FIG. 19, the duty cycle might be 50%, and hence might allow the determination that the second information is conveyed in the input voltage U_{IN}.

FIG. 20 illustrates a schematic voltage versus frequency diagram of an input voltage according to a third embodiment of the invention. Here, it is exemplarily shown that the first and third periods have a higher frequency than the second period. Therefore, determining the higher and/or lower frequency allows to determine that either the first and/or the second information is conveyed.

It will be appreciated by those skilled in the art that changes could be made to the embodiments described above without departing from the scope of the present invention as defined by the appended claims.

### REFERENCE SIGNS:

- 1,1': control circuit
- 3: voltage
- 5: first output channel
- 7: second output channel
- 9a, 9b: light source
- 11a, 11b: light source
- 13: filter
- 15: monitoring circuit
- 17: first interface
- 19: second interface
- 21: third interface
- 100: camera module
- 110: camera module housing
- 120: light passage
- 130: camera lens
- 200: camera module
- 210: camera module housing
- 220: light passage
- 230: camera lens
- 300: camera module
- 310: camera module housing
- 320: light passage
- 330: camera lens
- 400: camera module
- 410: camera module housing
- 420: light passage
- 430: camera lens
- 500: camera module
- 510: camera module housing
- 520: light passage
- 530: camera lens
- 600: camera module
- 610: camera module housing
- 620: light passage
- 630: camera lens
- 640: LED
- 650: light guide
- 700A: camera module
- 710A: camera module housing
- 750A: light guide
- 700B: camera module
- 710B: camera module housing
- 750B: light guide
- 700C: camera module
- 710C: camera module housing
- 750C: light guide
- 800: camera module
- 810: camera module housing
- 820A, 820B: light passage
- 830: camera lens
- 900: camera module
- 910: camera module housing
- 920A - 920D: light passage
- 930: camera lens
- 1000: camera module
- 1010: camera module housing
- 1020A - 1020D: light passage
- 1030: camera lens
- 1100: camera module
- 1110: camera module housing
- 1120: light passage
- 1130: camera lens
- 1200: camera module
- 1210: camera module housing
- 1220: light passage
- 1230: camera lens
- 2000: camera
- Uᵢₙ: input voltage

## Claims

1. A camera module (100, 200, 300, 400, 500, 600, 1000, 1200) of a vehicle, comprising:
a signal lamp comprising at least a first light source (640) and being adapted to radiate light having a first color and a second color, the first color being different from the second color; and
a camera module housing (110, 210, 310, 410, 510, 610, 1010, 1210)
**characterized in that**
a first light passage and a second light passage (120, 220, 320, 420, 520, 620, 1020, 1220) are arranged within the camera module housing (110, 210, 310, 410, 510, 610, 1010, 1210) and on the rear surface as seen from the driving direction of the camera module housing (110, 210, 310, 410, 510, 610, 1010, 1210), when the camera module housing (110, 210, 310, 410, 510, 610, 1010, 1210) is mounted on the vehicle, and being adapted to allow for light passing through from the first light source,
wherein the first and second passages (120, 220, 320, 420, 520, 620, 1020, 1220) are to be arranged around a lens (130, 230, 330, 430, 530, 630, 1030, 1230) of a camera,
wherein the first light source (640) is a light emitting diode (LED) that is arranged at a rear portion of the camera module housing (110, 210, 310, 410, 510, 610, 1010, 1210), and
the camera module (600) further comprises a plurality of light guides (650) connecting the LED to the first passage and the second passage (120, 220, 320, 420, 520, 620, 1020, 1220).

2. The camera module of claim 1, wherein the first passage and the second passage (120, 220, 320, 420, 520, 620, 1020, 1220) have a circular, ovular, square, rectangular, triangular, octagonal, icon, or other freeform shape.

3. The camera module of any one of the preceding claims, wherein
the first and second passages (120, 220, 320, 420, 520, 620, 1020, 1220) are configured such that a signal of the first light source does not interfere with an input of the camera, with preferably
the signal being configured to be recognized by a driver of the vehicle.

4. The camera module of any one of the preceding claims, further comprising a control circuit (1) for controlling lighting of the signal lamp.

5. The camera module of claim 4, where the first light source (640) comprises a first lighting device and a second lighting device, and where the control circuit (1) comprises:
at least a voltage input channel (3) for receiving an input voltage (Uᵢₙ);
at least a first output channel (5), wherein the first output channel (5) is adapted to control the on and off states of the first lighting device connected to the first output channel (5), and at least a second output channel (7), wherein the second output channel (7) is adapted to control the on and off states of the second lighting device connected to the second output channel (7),
wherein the first output channel (5) is adapted to turn the first lighting device on and the second output channel (7) is adapted to turn the second lighting device off based on a first information in the input voltage (Uᵢₙ), and
the first output channel (5) is adapted to turn the first lighting device off and the second output channel (7) is adapted to turn the second lighting device on based on a second information in the input voltage (Uᵢₙ), wherein
• the first lighting device and the second lighting device comprise an array of light sources (9a, 9b, 11a, 11b), wherein
• the first lighting device comprises light sources (9a, 9b) having the first color, and the second lighting device comprises light sources (11a, 11b) having the second color and the light sources (9a, 9b, 11a, 1 1b) can be comprised in a side-turn indicator.

6. The camera module of claim 5, wherein
• the control circuit (1) is adapted to determine the first information by determining that the input voltage (Uᵢₙ) is below a threshold, and determining the second information by determining that the input voltage (Uᵢₙ) is above the threshold, and the control circuit (1) comprises a trigger circuit to adjust the threshold, or
• the control circuit (1) is adapted to determine the first information by determining that the input voltage (Uᵢₙ) comprises a first duty cycle rate, preferably 20%, and to determine the second information by determining that the input voltage (Uᵢₙ) comprises a second duty cycle rate, preferably 50%, preferably wherein the duty cycle interval is 1 KHz, or
• the control circuit (1) is adapted to determine the first information by determining that the input voltage comprises a first frequency and to determine the second information by determining that the input voltage comprises a second frequency, wherein the first and second frequencies are different.

7. The camera module of any one of the claims 5 or 6, wherein
• at least one of the first output channel (5) or the second output channel (7) comprises a delay circuit for time-delaying the output channel/output channels (5, 7), and/or
• the control circuit (1) comprises at least one filter circuit (13) to extract the first information and the second information from the input voltage (Uᵢₙ), and/or
• the input voltage (Uᵢₙ) comprises the supply voltage for the first lighting device and/or second lighting device, or the control circuit (1) comprises a discreet logic circuit, or a field-programmable gate array, FPGA.

8. A rear view display device for a vehicle, comprising the camera module with the control circuit of any one of the claims 6 or 7 and a monitoring circuit (15), wherein the monitoring circuit (15) is adapted to supply the input voltage (Uᵢₙ) comprising the first and second information to the control circuit (1) for flashing at least one of the lighting devices in the first color for indicating a change of direction and in the second color for an application other than indicating a change in direction, with preferably the monitoring circuit (15) being adapted to supply information to the control circuit (1) for flashing the lighting device in blue.

9. The rear view display device of claim 8, wherein
the monitoring circuit (15) comprises a wireless receiver arranged in a passenger compartment of the vehicle, and wherein the wireless receiver is adapted to detect the presence of at least one wireless sender, preferably a plurality of wireless senders in the passenger compartment, and wherein the monitoring circuit (15) is adapted to supply the information to the control circuit (1) for turning the lighting devices on or off as a result of detecting the removal of the wireless sender, the information being sent upon detecting that the vehicle is being locked.

10. The rear view display device of claim 9, wherein
the wireless receiver or wireless sender comprises at least one of a radio frequency identification (RFID) receiver or sender, a Bluetooth receiver or sender, a Wi-Fi receiver or sender, or a receiver or sender using wireless technology.

11. The rear view display device of any one of the claims 8 to 10, wherein
the monitoring circuit (15) is coupled to a position detection circuit, comprising a Global Positioning System, GPS, receiver, to obtain information regarding the position of the vehicle, and
the monitoring circuit (15) is adapted to supply information to the control circuit (1) as a result of detecting the position of the vehicle, preferably the information is sent upon detecting that the vehicle is positioned in a no-parking zone.

12. The rear view display device of any one of the claims 8 to 11, wherein
the monitoring circuit (15) is coupled to an onboard diagnostic system, and
the monitoring circuit (15) is adapted to supply information to the control circuit (1) as a result of detecting a malfunctioning of the vehicle detected by the onboard diagnostic system, wherein a malfunctioning is detected based on a tire pressure value, and/or fuel level value.

13. The rear view display device of any one of the claims 8 to 12, wherein
the monitoring circuit (15) comprises:
a first port to couple the monitoring circuit (15) to at least one turn-indicator or to all turn-indicators in the vehicle; and/or
a second port to couple the monitoring circuit (15) to the voltage input channel (3) of the control circuit (1); and/or
a third port to couple the monitoring circuit (15) to the control circuit (1) via a bus system of the vehicle, preferably via a Controller Area Network, CAN, bus, a Local Interconnect Network, LIN bus, and/or a system utilizing Ethernet or TCP/IP.

## Patentansprüche

1. Kameramodul (100, 200, 300, 400, 500, 600, 1000, 1200) eines Fahrzeugs, umfassend:
eine Signallampe, die mindestens eine erste Lichtquelle (640) umfasst und angepasst ist, Licht mit einer ersten Farbe und einer zweiten Farbe abzustrahlen, wobei sich die erste Farbe von der zweiten Farbe unterscheidet; und
ein Kameramodulgehäuse (110, 210, 310, 410, 510, 610, 1010, 1210),
**dadurch gekennzeichnet, dass**
ein erster Lichtdurchlass und ein zweiter Lichtdurchlass (120, 220, 320, 420, 520, 620, 1020, 1220) innerhalb des Kameramodulgehäuses (110, 210, 310, 410, 510, 610, 1010, 1210) und auf der aus der Fahrtrichtung gesehen hinteren Fläche des Kameramodulgehäuses (110, 210, 310, 410, 510, 610, 1010, 1210) angeordnet sind,
wenn das Kameramodulgehäuse (110, 210, 310, 410, 510, 610, 1010, 1210) an dem Fahrzeug montiert ist, und angepasst sind, Licht von der ersten Lichtquelle durchzulassen,
wobei der erste und der zweite Durchlass (120, 220, 320, 420, 520, 620, 1020, 1220) um ein Objektiv (130, 230, 330, 430, 530, 630, 1030, 1230) einer Kamera herum anzuordnen sind,
wobei die erste Lichtquelle (640) eine Leuchtdiode (LED) ist, die an einem hintere Abschnitt des Kameramodulgehäuses (110, 210, 310, 410, 510, 610, 1010, 1210) angeordnet ist, und
das Kameramodul (600) ferner eine Mehrzahl von Lichtleitern (650) umfasst, die die LED mit dem ersten Durchlass und dem zweiten Durchlass (120, 220, 320, 420, 520, 620, 1020, 1220) verbinden.

2. Kameramodul nach Anspruch 1, wobei der erste Durchlass und der zweite Durchlass (120, 220, 320, 420, 520, 620, 1020, 1220) eine kreisrunde, ovale, quadratische, rechteckige, dreieckige, achteckige, ikonische oder andere freie Form aufweisen.

3. Kameramodul nach einem der vorhergehenden Ansprüche, wobei der erste und der zweite Durchlass (120, 220, 320, 420, 520, 620, 1020, 1220) so konfiguriert sind, dass ein Signal der ersten Lichtquelle nicht mit einem Eingang der Kamera interferiert, wobei das Signal vorzugsweise so konfiguriert ist, dass es von einem Fahrer des Fahrzeugs erkannt wird.

4. Kameramodul nach einem der vorhergehenden Ansprüche, ferner umfassend eine Steuerschaltung (1) zur Steuerung der Beleuchtung der Signallampe.

5. Kameramodul nach Anspruch 4, wobei die erste Lichtquelle (640) eine erste Beleuchtungsvorrichtung und eine zweite Beleuchtungsvorrichtung umfasst und wobei die Steuerschaltung (1) umfasst:
mindestens einen Spannungseingangskanal (3) zum Empfangen einer Eingangsspannung (Uᵢₙ);
mindestens einen ersten Ausgangskanal (5),
wobei der erste Ausgangskanal (5) angepasst ist, den Ein- und Aus-Zustand der ersten Beleuchtungsvorrichtung zu steuern, die mit dem ersten Ausgangskanal (5) verbunden ist, und
mindestens einen zweiten Ausgangskanal (7)
wobei der zweite Ausgangskanal (7) angepasst ist, den Ein- und Aus-Zustand der zweiten Beleuchtungsvorrichtung zu steuern, die mit dem zweiten Ausgangskanal (7) verbunden ist,
wobei der erste Ausgangskanal (5) angepasst ist, die erste Beleuchtungsvorrichtung einzuschalten und der zweite Ausgangskanal (7) angepasst ist, die zweite Beleuchtungsvorrichtung auszuschalten, basierend auf einer ersten Information in der Eingangsspannung (Uᵢₙ), und
der erste Ausgangskanal (5) angepasst ist, die erste Beleuchtungsvorrichtung auszuschalten, und der zweite Ausgangskanal (7) angepasst ist, die zweite Beleuchtungsvorrichtung einzuschalten, basierend auf einer zweiten Information in der Eingangsspannung (Uᵢₙ), wobei
• die erste Beleuchtungsvorrichtung und die zweite Beleuchtungsvorrichtung eine Anordnung von Lichtquellen (9a, 9b, 11a, 11b) umfassen, wobei
• die erste Beleuchtungsvorrichtung Lichtquellen (9a, 9b) umfasst, die die erste Farbe aufweisen, und die zweite Beleuchtungsvorrichtung Lichtquellen (11a, 11b) umfasst, die die zweite Farbe aufweisen, und die Lichtquellen (9a, 9b, 11a, 1 1b) in einem Seitenblinker enthalten sein können.

6. Kameramodul nach Anspruch 5, wobei
• die Steuerschaltung (1) angepasst ist, die erste Information zu bestimmen, in dem bestimmt wird, dass die Eingangsspannung (Uᵢₙ) unter einem Schwellenwert liegt, und die zweite Information zu bestimmen, in dem bestimmt wird, dass die Eingangsspannung (Uᵢₙ) über dem Schwellenwert liegt, und die Steuerschaltung (1) eine Triggerschaltung umfasst, um den Schwellenwert anzupassen, oder
• die Steuerschaltung (1) angepasst ist, die erste Information zu bestimmen, in dem bestimmt wird, dass die Eingangsspannung (Uᵢₙ) eine erste Tastverhältnisrate, vorzugsweise 20 %, umfasst, und die zweite Information zu bestimmen, in dem bestimmt wird, dass die Eingangsspannung (Uᵢₙ) eine zweite Tastverhältnisrate, vorzugsweise 50 %, umfasst, wobei das Tastverhältnisintervall vorzugsweise 1 KHz beträgt, oder
• die Steuerschaltung (1) angepasst ist, die erste Information zu bestimmen, in dem bestimmt wird, dass die Eingangsspannung eine erste Frequenz umfasst, und die zweite Information zu bestimmen, in dem bestimmt wird, dass die Eingangsspannung eine zweite Frequenz umfasst, wobei die erste und die zweite Frequenz unterschiedlich sind.

7. Kameramodul nach einem der Ansprüche 5 oder 6, wobei
• zumindest einer von dem ersten Ausgangskanal (5) oder dem zweiten Ausgangskanal (7) eine Verzögerungsschaltung zum zeitlichen Verzögern des Ausgangskanals / der Ausgangskanäle (5, 7) umfasst, und/oder
• die Steuerschaltung (1) mindestens eine Filterschaltung (13) umfasst, um die erste Information und die zweite Information aus der Eingangsspannung (Uᵢₙ) zu extrahieren, und/oder
• die Eingangsspannung (Uᵢₙ) die Versorgungsspannung für die erste Beleuchtungsvorrichtung und/oder die zweite Beleuchtungsvorrichtung umfasst, oder die Steuerschaltung (1) eine diskrete Logikschaltung oder ein Feld-programmierbares Gate-Array, FPGA, umfasst.

8. Rückblickanzeigevorrichtung für ein Fahrzeug, umfassend das Kameramodul mit der Steuerschaltung nach einem der Ansprüche 6 oder 7 und eine Überwachungsschaltung (15), wobei die Überwachungsschaltung (15) angepasst ist, die Eingangsspannung (Uᵢₙ) umfassend die erste und die zweite Information der Steuerschaltung (1) zuzuführen, um mindestens eine der Beleuchtungsvorrichtungen in der ersten Farbe zur Anzeige eines Richtungswechsels und in der zweiten Farbe für eine andere Anwendung als die Anzeige eines Richtungswechsels blinken zu lassen, wobei vorzugsweise die Überwachungsschaltung (15) angepasst ist, der Steuerschaltung (1) Informationen zum Blinken der Beleuchtungsvorrichtung in Blau zuzuführen.

9. Rückblickanzeigevorrichtung nach Anspruch 8, wobei
die Überwachungsschaltung (15) einen drahtlosen Empfänger umfasst, der in einem Fahrgastraum des Fahrzeugs angeordnet ist, und wobei der drahtlose Empfänger angepasst ist, das Vorhandensein mindestens eines drahtlosen Senders, vorzugsweise mehrerer drahtloser Sender im Fahrgastraum, zu erfassen, und wobei die Überwachungsschaltung (15) angepasst ist, die Informationen der Steuerschaltung (1) zuzuführen, um die Beleuchtungsvorrichtungen als Ergebnis der Erfassung der Entfernung des drahtlosen Senders ein- oder auszuschalten, wobei die Informationen gesendet werden, wenn erfasst wird, dass das Fahrzeug verriegelt wird.

10. Rückblickanzeigevorrichtung nach Anspruch 9, wobei
der drahtlose Empfänger oder drahtlose Sender mindestens eines von einem Radiofrequenzidentifikations (RFID) -Empfänger oder -Sender, einem Bluetooth-Empfänger oder -Sender, einem Wi-Fi-Empfänger oder -Sender oder einem Empfänger oder Sender, der drahtlose Technologie verwendet, umfasst.

11. Rückblickanzeigevorrichtung nach einem der Ansprüche 8 bis 10, wobei
die Überwachungsschaltung (15) mit einer Positionserfassungsschaltung gekoppelt ist,
die einen Global Positioning System, GPS, -Empfänger umfasst, um Informationen über
die Position des Fahrzeugs zu erhalten, und
die Überwachungsschaltung (15) angepasst ist, als ein Ergebnis der Erfassung der Position des Fahrzeugs der Steuerschaltung (1) Informationen zuzuführen, wobei die Informationen vorzugsweise gesendet werden, wenn erfasst wird, dass sich das Fahrzeug in einer Parkverbotszone befindet.

12. Rückblickanzeigevorrichtung nach einem der Ansprüche 8 bis 11, wobei die Überwachungsschaltung (15) mit einem Onboard-Diagnosesystem gekoppelt ist, und die Überwachungsschaltung (15) angepasst ist, der Steuerschaltung (1) als ein Ergebnis der Erfassung einer Fehlfunktion des Fahrzeugs, die durch das Onboard-Diagnosesystem erfasst wird, Informationen zuzuführen, wobei eine Fehlfunktion auf der Grundlage eines Reifendruckwerts und/oder eines Kraftstofffüllstandswertes erfasst wird.

13. Rückblickanzeigevorrichtung nach einem der Ansprüche 8 bis 12, wobei die Überwachungsschaltung (15) umfasst:
einen ersten Anschluss zum Koppeln der Überwachungsschaltung (15) mit mindestens
einem Blinker oder mit allen Blinkern des Fahrzeugs; und/oder
einen zweiten Anschluss zum Koppeln der Überwachungsschaltung (15) mit dem Spannungseingangskanal (3) der Steuerschaltung (1); und/oder
einen dritten Anschluss zum Koppeln der Überwachungsschaltung (15) mit der Steuerschaltung (1) über ein Bussystem des Fahrzeugs, vorzugsweise über einen Controller Area Network, CAN-Bus, einen Local Interconnect Network, LIN-Bus, und/oder ein System, das Ethernet oder TCP/IP verwendet.

## Revendications

1. Module de caméra (100, 200, 300, 400, 500, 600, 1000, 1200) d'un véhicule, comprenant :
une lampe de signalisation comprenant au moins une première source lumineuse (640) et prévue pour diffuser une lumière ayant une première couleur et une deuxième couleur, la première couleur étant différente de la deuxième couleur ; et
un boîtier de module de caméra (110, 210, 310, 410, 510, 610, 1010, 1210) ;
**caractérisé en ce que**
un premier passage lumineux et un deuxième passage lumineux (120, 220, 320, 420, 520, 620, 1020, 1220) sont ménagés à l'intérieur du boîtier de module de caméra (110, 210, 310, 410, 510, 610, 1010, 1210) et sur la surface arrière, vus dans la direction d'entraînement du boîtier de module de caméra (110, 210, 310, 410, 510, 610, 1010, 1210), quand le boîtier de module de caméra (110, 210, 310, 410, 510, 610, 1010, 1210) est monté sur le véhicule, et sont prévus pour permettre le passage de la lumière depuis la première source lumineuse,
le premier et le deuxième passages (120, 220, 320, 420, 520, 620, 1020, 1220) devant être ménagés autour d'une lentille (130, 230, 330, 430, 530, 630, 1030, 1230) d'une caméra,
la première source lumineuse (640) étant une diode électroluminescente (LED) disposée sur une partie arrière du boîtier de module de caméra (110, 210, 310, 410, 510, 610, 1010, 1210), et
le module de caméra (600) comprenant en outre une pluralité de guides d'ondes lumineuses (650) reliant la LED au premier passage et au deuxième passage (120, 220, 320, 420, 520, 620, 1020, 1220).

2. Module de caméra selon la revendication 1, où le premier passage et le deuxième passage (120, 220, 320, 420,520, 620, 1020, 1220) ont une forme circulaire, ovoïde, carrée, rectangulaire, triangulaire, octogonale, iconique ou une autre forme libre.

3. Module de caméra selon l'une quelconque des revendications précédentes, où le premier et le deuxième passages (120, 220, 320, 420,520, 620, 1020, 1220) sont configurés de telle manière qu'un signal de la première source lumineuse n'interfère pas avec une entrée de la caméra, le signal étant préférentiellement configuré pour être reconnu par le conducteur du véhicule.

4. Module de caméra selon l'une quelconque des revendications précédentes, comprenant en outre un circuit de commande (1) pour commander l'allumage de la lampe de signalisation.

5. Module de caméra selon la revendication 4, où la première source lumineuse (640) comprend un premier dispositif d'éclairage et un deuxième dispositif d'éclairage, et où le circuit de commande (1) comprend :
au moins un canal d'entrée de tension (3) pour recevoir une tension d'entrée (Uᵢₙ);
au moins un premier canal de sortie (5),
où le premier canal de sortie (5) est prévu pour commander les états d'activation et de désactivation du premier dispositif d'éclairage connecté au premier canal de sortie (5), et
au moins un deuxième canal de sortie (7)
où le deuxième canal de sortie (7) est prévu pour commander les états d'activation et de désactivation du deuxième dispositif d'éclairage connecté au deuxième canal de sortie (7),
où le premier canal de sortie (5) est prévu pour activer le premier dispositif d'éclairage et le deuxième canal de sortie (7) est prévu pour désactiver le deuxième dispositif d'éclairage sur la base d'une première information dans la tension d'entrée (Uᵢₙ), et
le premier canal de sortie (5) est prévu pour désactiver le premier dispositif d'éclairage et le deuxième canal de sortie (7) est prévu pour activer le deuxième dispositif d'éclairage sur la base d'une deuxième information dans la tension d'entrée (Uᵢₙ), où
• le premier dispositif d'éclairage et le deuxième dispositif d'éclairage comprennent un réseau de sources lumineuses (9a, 9b, 11a, 11b), où
• le premier dispositif d'éclairage comprend des sources lumineuses (9a, 9b) ayant la première couleur, et le deuxième dispositif d'éclairage comprend des sources lumineuses (11a, 11b) ayant la deuxième couleur, et les sources lumineuses (9a, 9b, 11a, 11b) peuvent être comprises dans un clignotant.

6. Module de caméra selon la revendication 5, où
• le circuit de commande (1) est prévu pour déterminer la première information par détermination que la tension d'entrée (Uᵢₙ) est en dessous d'un seuil, et déterminer la deuxième information par détermination que la tension d'entrée (Um) est au-dessus du seuil, et le circuit de commande (1) comprend un circuit de déclenchement pour régler le seuil, ou
• le circuit de commande (1) est prévu pour déterminer la première information par détermination que la tension d'entrée (Uᵢₙ) comprend un premier coefficient d'utilisation, préférentiellement de 20 %, et pour déterminer la deuxième information par détermination que la tension d'entrée (Uᵢₙ) comprend un deuxième coefficient d'utilisation, préférentiellement de 50 %, l'intervalle de cycle d'utilisation étant préférentiellement de 1 KHz, ou
• le circuit de commande (1) est prévu pour déterminer la première information par détermination que la tension d'entrée comprend une première fréquence et pour déterminer la deuxième information par détermination que la tension d'entrée comprend une deuxième fréquence, la première et la deuxième fréquences étant différentes.

7. Module de caméra selon la revendication 5 ou la revendication 6, où
• le premier canal de sortie (5) et/ou le deuxième canal de sortie (7) comprennent un circuit de temporisation pour la temporisation du canal/des canaux de sortie (5, 7), et/ou
• le circuit de commande (1) comprend au moins un circuit de filtrage (13) pour extraire la première information et la deuxième information de la tension d'entrée (Uᵢₙ), et/ou
• la tension d'entrée (Uᵢₙ) comprend la tension d'alimentation pour le premier dispositif d'éclairage et/ou le deuxième dispositif d'éclairage, ou le circuit de commande (1) comprend un circuit logique discret, ou un réseau logique programmable sur site FPGA.

8. Dispositif d'écran rétroviseur pour un véhicule, comprenant le module de caméra avec le circuit de commande selon la revendication 6 ou la revendication 7 et un circuit de surveillance (15), ledit circuit de surveillance (15) étant prévu pour fournir la tension d'entrée (Uᵢₙ) comprenant la première et la deuxième informations au circuit de commande (1) pour le clignotement d'au moins un des dispositifs d'éclairage dans la première couleur afin d'indiquer un changement de direction, et dans la deuxième couleur pour une application autre que celle d'indication d'un changement de direction, le circuit de surveillance (15) étant préférentiellement prévu pour délivrer une information au circuit de commande (1) pour le clignotement en bleu du dispositif d'éclairage.

9. Dispositif d'écran rétroviseur selon la revendication 8, où
le circuit de surveillance (15) comprend un récepteur sans fil disposé dans l'habitacle du véhicule, et où ledit récepteur sans fil est prévu pour détecter la présence d'au moins un émetteur sans fil, préférentiellement une pluralité d'émetteurs sans fil dans l'habitacle, et où le circuit de surveillance (15) est prévu pour délivrer l'information au circuit de commande (1) pour activer ou désactiver les dispositifs d'éclairage en tant que résultat de détection du retrait de l'émetteur sans fil, l'information étant émise par détection que le véhicule est verrouillé.

10. Dispositif d'écran rétroviseur selon la revendication 9, où
le récepteur sans fil ou l'émetteur sans fil comprennent au moins un des émetteurs ou récepteurs suivants : à identification par radiofréquence (RFID), Bluetooth, Wi-Fi, émetteur ou récepteur à technologie sans fil.

11. Dispositif d'écran rétroviseur selon l'une quelconque des revendications 8 à 10, où le circuit de surveillance (15) est relié à un circuit de détection de position, comprenant un récepteur de système de positionnement global, GPS, afin d'obtenir une information relative à la position du véhicule, et où
le circuit de surveillance (15) est prévu pour fournir l'information au circuit de commande (1) en tant que résultat de détection de la position du véhicule, l'information étant préférentiellement émise par détection que le véhicule est présent dans une zone à stationnement interdit.

12. Dispositif d'écran rétroviseur selon l'une quelconque des revendications 8 à 11, où le circuit de surveillance (15) est relié à un système de diagnostic embarqué, et
le circuit de surveillance (15) est prévu pour fournir une information au circuit de commande (1) en tant que résultat de détection d'un dysfonctionnement du véhicule détecté par le système de diagnostic embarqué, un dysfonctionnement étant détecté sur la base d'une valeur de pression de pneu et/ou d'une valeur de niveau de carburant.

13. Dispositif d'écran rétroviseur selon l'une quelconque des revendications 8 à 12, où le circuit de surveillance (15) comprend :
un premier port pour relier le circuit de surveillance (15) à au moins un clignotant ou à tous les clignotants du véhicule ; et/ou
un deuxième port pour relier le circuit de surveillance (15) au canal d'entrée de tension (3) du circuit de commande (1) ; et/ou
un troisième port pour relier le circuit de surveillance (15) au circuit de commande (1) par l'intermédiaire d'un système de bus du véhicule, préférentiellement par l'intermédiaire d'un bus de réseau de zone de contrôleur CAN, d'un bus de réseau d'interconnexion local LIN et/ou d'un système recourant à Ethernet ou à TCP/IP.
